# EUROPEAN PATENT APPLICATION

(11) **EP 4 693 201 A1**
(43) Date of publication of application: **11.02.2026**
(21) Application number: 24780579.9
(22) Date of filing: 27.03.2024
(51) Int. Cl.: G06T 13/40, G01S 5/14, G06F 21/62

(54) **MOTION AUTHENTICATION SYSTEM**

(30) Priority: 31.03.2023 JP 2023059127
(71) Applicant: The Chugoku Electric Power Co., Inc., Hiroshima-shi, Hiroshima 730-8701 (JP)
(72) Inventor: FUKUHARA Yoji, Hiroshima-shi, Hiroshima 730-8701 (JP); KAMATA Ryosuke, Hiroshima-shi, Hiroshima 730-8701 (JP); TANABE Ryota, Hiroshima-shi, Hiroshima 730-8701 (JP); TAKANO Tomohiro, Hiroshima-shi, Hiroshima 730-8701 (JP); TOYOTA Mitsuo, Hiroshima-shi, Hiroshima 730-8701 (JP); TAKI Yoshihiko, Tokyo 102-0094 (JP)
(74) Representative: Hoffmann Eitle
(86) International application number: PCT/JP2024/012523
(87) International publication number: WO 2024/204478

(57) **Abstract**

An object of the present invention is to provide a novel system capable of specifying the motions of humans or animals.

Provided is a system that includes at least one computer apparatus. The system comprises a position specifier that specifies a position of each of a plurality of sensors worn at a plurality of different positions of a human body or an animal body at predetermined time intervals. The system may include a position storage that stores the position of each of the plurality of sensors specified by the position specifier at the predetermined time intervals. Also, the system may include a motion executer that causes a virtual model to execute a motion in a virtual space based on the position of each of the plurality of sensors at the predetermined time intervals specified by the position specifier.

## Description

### Technical Field

The present invention relates to a system and a method.

### Background Art

The copyright law provides that dances are works that are subject to copyright protection. There are court cases in which copyrightability of choreography for ballet and Japanese traditional dance is recognized, and choreography for dances and other performances under copyright law can be protected. For such protection of motions of human, protection based on a concept such as a so-called motion right is required not only in the real world but also in a virtual space.

### Summary of Invention

### Technical Problem

An object of the present invention is to provide a novel system capable of specifying the motions of humans or animals.

### Solution to Problem

The present invention solves the above problem by any of the following:
[1] A system that includes at least one computer apparatus, the system comprising: a position specifier that specifies a position of each of a plurality of sensors worn at a plurality of different positions of a human body or an animal body at predetermined time intervals;
[2] The system according to [1], comprising: a position storage that stores the position of each of the plurality of sensors specified by the position specifier at the predetermined time intervals;
[3] The system according to [1] or [2], comprising: a motion executer that causes a virtual model to execute a motion in a virtual space based on the position of each of the plurality of sensors at the predetermined time intervals specified by the position specifier;
[4] The system according to [3], wherein the motion executer enables a motion to be executed only by the virtual model corresponding to a predetermined user;
[5] The system according to [3] or [4], comprising: a storage that stores a non-fungible token (NFT) associated with the information regarding the motion on a blockchain in association with an account owned by the predetermined user;
[6] The system according to any one of [1] to [5], comprising: an exoskeleton or wearable robot worn by a human or an animal and that is capable of controlling or assisting a motion of the human or the animal in the real world; and a controller that controls or assists the human or the animal wearing the exoskeleton or wearable robot to execute a motion based on the position of each of the plurality of sensors at the predetermined time intervals specified by the position specifier;
[7] The system according to any one of [1] to [6], comprising: a plurality of wireless devices; and a distance calculator that calculates a distance between each of the plurality of wireless devices and the sensor based on information or a signal propagation time between each of the plurality of wireless devices and the sensor at the predetermined time intervals, wherein the position specifier specifies a position of the sensor based on the calculated distance between each of the plurality of wireless devices and the sensor;
[8] The system according to [7], wherein the distance calculator calculates the distance based on a time deviation between a clock of one of the wireless devices and a clock of the sensor;
[9] The system according to [7] or [8], comprising: a time deviation calculator that calculates a time deviation between one of the wireless devices and the sensor by executing communication between the one wireless device and the sensor; and a time corrector that corrects a time in the sensor based on the calculated time deviation;
[10] The system according to any one of [7] to [9], comprising: a phase deviation calculator that calculates a phase deviation between clocks of one of the wireless devices and the sensor by executing communication between the one wireless device and the sensor; and a phase corrector that corrects a phase in the sensor based on the calculated phase deviation;
[11] A method executed in a system including at least one computer apparatus, the method comprising: a position specifying step of specifying a position of each of a plurality of sensors worn at a plurality of different positions of a human body or an animal body at predetermined time intervals.

### Advantageous Effects of Invention

According to the present invention, it is possible to provide a novel system capable of specifying the motions of humans or animals.

### Brief Description of Drawings

Fig. 1 is a block diagram illustrating a configuration of a system according to an embodiment of the present invention.
Fig. 2 is a block diagram illustrating a configuration of a wireless device according to the embodiment of the present invention.
Fig. 3 is a block diagram illustrating a configuration of a sensor according to the embodiment of the present invention.
Fig. 4 is a block diagram illustrating a configuration of the server apparatus according to the embodiment of the present invention.
Fig. 5 is a flowchart illustrating motion registration processing according to the embodiment of the present invention.
Fig. 6 is a flowchart illustrating motion execution processing according to the embodiment of the present invention.
Fig. 7 is a diagram illustrating a flowchart of an NFT issuing processing according to the embodiment of the present invention.
Fig. 8 is a flowchart illustrating distance calculation processing according to the embodiment of the present invention.
Fig. 9 is a flowchart illustrating the position specifying processing according to the embodiment of the present invention.
Fig. 10 is a flowchart illustrating motion control processing according to the embodiment of the present invention.

### Description of Embodiments

Hereinafter, embodiments of the invention will be described with reference to the accompanying drawings. It should be noted that the description regarding the effects illustrates one aspect of the effects of the embodiments of the invention and is not limited to those specifically mentioned herein. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

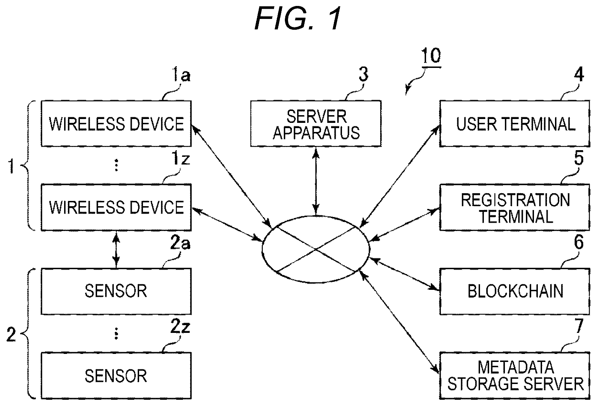

Fig. 1 is a block diagram illustrating a configuration of a system according to an embodiment of the present invention. As illustrated, the system 10 includes, for example, a plurality of wireless devices 1a to 1z, a plurality of sensors 2a to 2z, and a server apparatus 3. The system 10 may include a user terminal 4, a registration terminal 5, a blockchain 6, and a metadata storage server 7.

The number of wireless devices 1 is not particularly limited, but it is preferable to include at least four wireless devices. Positions at which the plurality of wireless devices 1 are installed are not particularly limited. For example, it is preferable that the plurality of wireless devices 1 are provided in a predetermined space (hereinafter referred to as a "registration space") in the real world, such as a facility where a motion to be described below is registered. The position of the wireless device 1 is preferably fixed. The position of the wireless device 1 may be stored in the sensor 2, the server apparatus 3, or the like in association with identification information with which the wireless device 1 can be identified.

The wireless devices 1a to 1z and the sensor 2 can be directly communicably connected without a communication network. The wireless devices 1a to 1z can be communicably connected to the server apparatus 3 via a communication network.

The wireless device 1 is a device used to specify the position of the sensor 2. The wireless device 1 is a reference device that synchronizes clocks of the sensors 2, and one wireless device 1 can also function as a reference device that synchronizes clocks of the plurality of sensors 2. Further, one wireless device 1 can function as a reference device that synchronizes clocks of a plurality of other wireless devices 1. Since the wireless device 1 is a reference device that synchronizes clocks of the sensors 2, it is preferable that the wireless device 1 has a clock with higher accuracy.

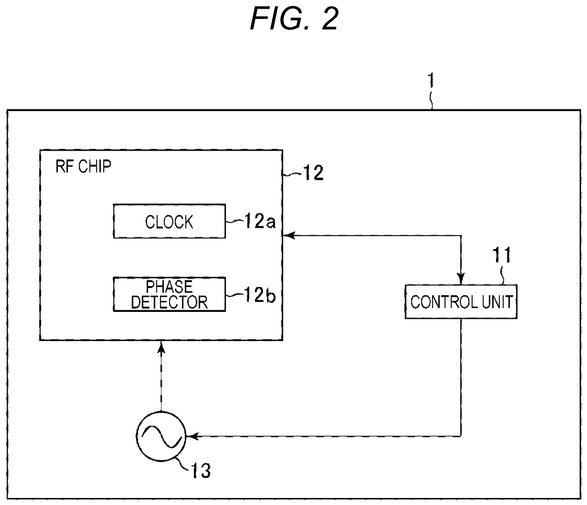

The wireless device 1 according to the present invention will be described. Fig. 2 is a diagram illustrating a configuration of a wireless device according to the embodiment of the present invention. The wireless device 1 includes a control unit 11, an RF chip 12, and an oscillator 13. The RF chip 12 includes a clock 12a and a phase detector 12b. The wireless device 1 may include other configuration as necessary in addition to the control unit 11, the RF chip 12, the oscillator 13, the clock 12a, and the phase detector 12b.

The control unit 11 is not particularly limited. For example, a microcomputer (microcontroller) can be used. The control unit 11 executes program execution processing based on a program and data. The RF chip 12 executes processing for receiving and transmitting a radio signal. Data received by the RF chip 12 is subjected to an arithmetic processing by the control unit 11.

The oscillator 13 oscillates at a predetermined frequency and outputs a signal for providing an operational timing of each unit of an apparatus. As the oscillator 13, an atomic oscillator or a crystal oscillator can be used. The clock 12a clocks an output signal of the oscillator 13 as a source vibration and outputs time. A time clocked by the clock 12a is controlled by the control unit 11 such that the time is transmitted to the sensor 2 via the RF chip 12. The phase detector 12b detects a phase of a carrier wave included in the information received from the sensor 2, and detects a phase of a signal oscillated by the oscillator 13 in the wireless device 1.

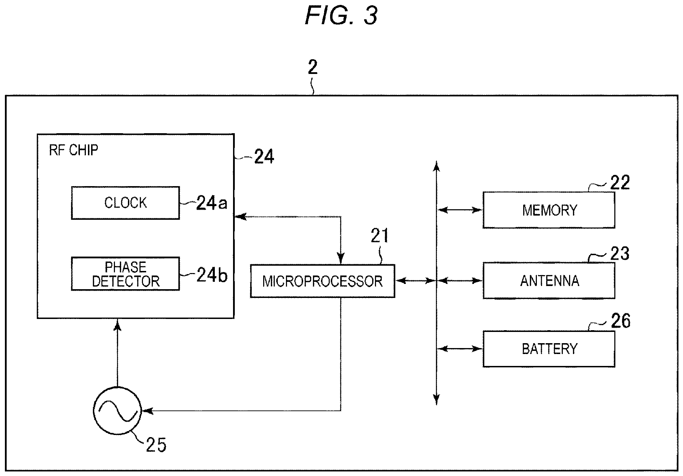

The sensor 2 is not particularly limited as long as the sensor 2 can specify the position of the sensor itself. As the sensor 2, for example, a GPS sensor, an ultrasonic sensor, an optical sensor, or the like can be used. In addition, as the sensor 2, for example, a sensor capable of specifying a position using a propagation time of information or a signal can be adopted. Fig. 3 is a block diagram illustrating a configuration of a sensor according to the embodiment of the present invention. The sensor 2 includes a microprocessor 21, a memory 22, an antenna 23, an RF chip 24, an oscillator 25, and a battery 26. The RF chip 24 includes a clock 24a and a phase detector 24b. In addition to these components, the sensor 2 may include other configuration as necessary.

The microprocessor 21 executes program execution processing. The RF chip 24 executes processing for receiving and transmitting a radio signal. Data received by the RF chip 24 is subjected to arithmetic processing by the microprocessor 21.

An electromagnetic wave transmitted from the wireless device 1 is received by the antenna 23. When the electromagnetic wave is received by the antenna 23, an electric signal is accordingly generated. Accordingly, the sensor 2 can receive power from the wireless device 1.

When the sensor 2 receives power from the wireless device 1, the microprocessor 21 starts to execute a program stored in the microprocessor 21 and the RF chip 24 can transmit, to the wireless device 1, a radio signal with which a time clocked by the clock 24a and a phase of the carrier wave can be specified.

The battery 26 supplies power to the clock 24a. Since the battery 26 supplies power to the clock 24a, the clock 24a can be continuously operated without supplying power to the sensor 2 by reception of an electromagnetic wave from the wireless device 1.

The oscillator 25 oscillates at a predetermined frequency and outputs a signal for giving an operational timing of each unit of the sensor 2. As the oscillator 25, an atomic oscillator or a crystal oscillator can be used. The clock 24a clocks an output signal of the oscillator 25 as a source vibration and outputs a time. The time clocked by the clock 24a is controlled by the microprocessor 21 such that the time is transmitted to the wireless device 1 via the RF chip 24. The phase detector 24b detects a phase of a carrier wave included in information received from the wireless device 1 and detects a phase of a signal oscillated by the oscillator 25 in the sensor 2.

The sensor 2 is worn on to a human body or an animal body. An animal is not particularly limited, but is preferably an animal that has a skeleton. The sensor 2 is preferably mounted at a position corresponding to an end point of a virtual joint or a virtual bone of a virtual 3-dimensional model (referred to as a virtual model) set in a virtual space corresponding to a human or an animal. The virtual model has a virtual skeleton in which a plurality of virtual bones are combined, and the virtual model can be motioned by motioning the virtual skeleton. When the sensor 2 is worn on a human, the virtual model is preferably a humanoid model. When the sensor 2 is worn on an animal, the virtual model is preferably a homogeneous animal model.

Here, a virtual bone A included in the virtual skeleton and a virtual bone B directly connected to the virtual bone A will be considered. The virtual bone can be defined by a line connecting two different points and may be defined by a straight line or may be defined by a curve.

The virtual bone A is substantially linear, and the virtual bone B is also substantially linear. End points of the virtual bone A are points P and Q, and End points of the virtual bone B are the point Q and a point R. The virtual bones A and B are connected at the point Q, and the point Q is a virtual joint. For example, if the point P corresponds to a shoulder, the point Q corresponds to an elbow. When the point R corresponds to a hand, the virtual bone A corresponds to an upper arm and the virtual bone B corresponds to a forearm. Each of the plurality of sensors 2 is worn on the shoulder, the elbow, and the back of the hand, a motion of the body can be reproduced by acquiring information regarding the position of each sensor during a motion of the body in association with time and controlling a motion of the virtual model based on the information regarding the position. It is preferable to wear the plurality of sensors 2 at positions corresponding to end points of a plurality of continuously connected virtual bones in any part (for example, any part such as an arm, a leg, an upper body, a lower body, or a whole body) of a control target virtual model. It is also possible to reproduce at least a part of the motion of the body in the virtual model by wearing the sensors 2 at positions on the body corresponding to three end points, that is, at least two end points of the virtual bone A and an end point on a side of the virtual bone B not connected to the virtual bone A connected at one end point of the virtual bone A, and specifying positions of the sensors 2 at predetermined time intervals.

Next, the server apparatus will be described. The server apparatus 3 can specify a position of the sensor 2 based on a distance between the sensor 2 and the wireless device 1 calculated by distance calculation processing to be described below. The position of the sensor 2 is stored in the server apparatus 3, for example, by associating a time with identification information with which the sensor 2 can be identified. The server apparatus 3 can cause the virtual model to reproduce and execute the same or similar motion as a motion executed by a user based on the information regarding the positions of the plurality of sensors 2 over time. Further, the server apparatus 3 can request other computer apparatus to store a state in which the virtual model executes a motion reproduced by the virtual model, as a motion-image information, store NFT associated with information available for accessing the moving-image information on the blockchain, or store the NFT associated with the information available for accessing the moving-image information on the blockchain.

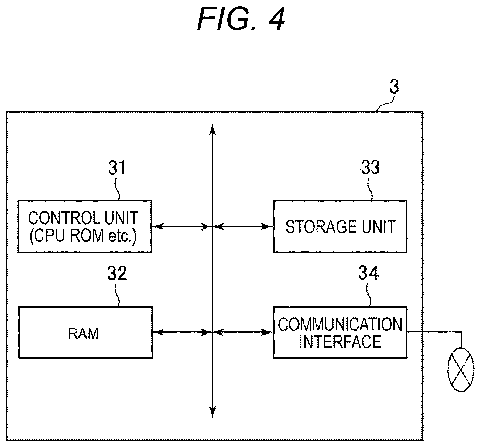

Fig. 4 is a block diagram illustrating a configuration of the server apparatus according to the embodiment of the present invention. The server apparatus 3 includes at least a control unit 31, a RAM 32, a storage unit 33, and a communication interface 34 and is connected via an internal bus.

The control unit 31 includes a CPU and a ROM, executes a program stored in the storage unit 33, and controls the server apparatus 3. The control unit 31 includes an internal timer that clocks a time. The RAM 32 is a work area of the control unit 31. The storage unit 33 is a storage region where programs and data are stored and functions as a recording medium. The control unit 31 reads a program and data from the RAM 32, and executes program execution processing based on information or the like received from the wireless device 1. The server apparatus 3 is communicably connectable to each of the wireless device 1, the user terminal 4, the registration terminal 5, the blockchain 6, and the metadata storage server 7 via a communication network.

In the present system, the server apparatus 3 is not necessarily one server apparatus, and may be a combination of a plurality of server apparatuses. Each processing in the server apparatus 3 to be described below may be executed by one server apparatus or may be shared and executed by the plurality of server apparatuses.

The user terminal 4 is used by the user to access a virtual space such as a metaverse and operate a virtual model such as an avatar. The registration terminal 5 is a terminal used when a motion desired by the user is registered.

The user terminal 4 or the registration terminal 5 includes a control unit, a RAM, a storage unit, an input unit, a display unit, and a communication interface, and are connected via a bus. The control unit includes a CPU and a ROM. The control unit executes a program stored in the storage unit to control the user terminal 4 or the registration terminal 5. The RAM is a work area of the control unit. The storage unit is a storage region where programs and data are stored and functions as a recording medium. The control unit executes arithmetic processing based on a program and data read from the RAM and data input by the input unit.

The display unit of the user terminal 4 or the registration terminal 5 has a display screen. The control unit outputs a video signal for displaying an image on the display screen according to a result of the arithmetic processing. Here, the display screen of the display unit may be a touch panel including a touch sensor. In this case, the touch panel functions as an input unit.

The communication interface of the user terminal 4 or the registration terminal 5 can be connected to a communication network in a wireless or wired manner, and can transmit and receive data to and from the server apparatus 3 via the communication network. Data received via the communication interface is loaded into the RAM, and arithmetic processing is executed by the control unit.

The same single computer apparatus may be used as the user terminal 4 and the registration terminal 5, and the user terminal 4 and the registration terminal 5 may be different computer apparatuses.

The blockchain 6 is not particularly limited, and a known blockchain can be used. The blockchain 6 may be a public blockchain or a private blockchain. A configuration of the metadata storage server 7 is not particularly limited. For example, the same configuration as that of the server apparatus 3 described above may be used.

In the present system, NFT can be issued in association with the moving-image information. The server apparatus 3 stores moving-image information. When the NFT is issued, the information regarding a moving image (for example, a creator of a moving image (a human who has registered a motion) and information describing the motion in the moving image) and a storage location (URL) of the moving-image information are converted into metadata along with the name of the NFT and information regarding the NFT such as a publisher of the NFT, and are stored in the metadata storage server 7. The blockchain 6 stores a token ID, holder information of the token, and a transaction history of the token as index data together with a storage location of the metadata (URL) in the metadata storage server 7. Accordingly, the moving-image information is associated with the NFT in a state where the moving-image information is converted into metadata. The moving-image information may be associated with data associated with the NFT as long as the association can be traced from the NFT.

### [Motion Registration Processing]

Next, motion registration processing will be described. First, the plurality of sensors 2 are worn at positions on the user's body corresponding to end points of the virtual joint and/or the virtual skeleton of the virtual model. When motions of the whole body of the user are registered, the sensors 2 are worn at positions on the body corresponding to end points of a virtual joint and/or the virtual skeleton of the whole body of the virtual model. When the sensors 2 are worn on the body of the user, the sensors 2 may be worn from above an underwear worn by the user, or the sensors 2 may be worn from above the skin. The sensors 2 may be worn on the body using a belt or the like or may be attached by an adhesive tape or the like.

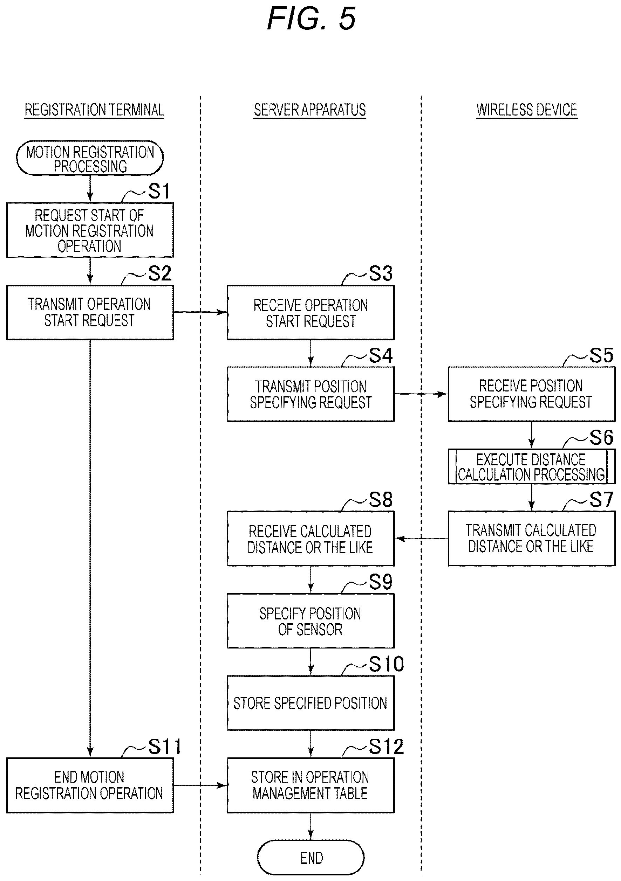

Fig. 5 is a flowchart illustrating motion registration processing according to the embodiment of the present invention. First, the user or a cooperator for motion registration different from the user operates the registration terminal 5 to start a dedicated application for registering a motion. Then, the user or the cooperator operates the registration terminal 5 to request start of the motion registration operation (step S1). More specifically, the user or the cooperator operates the registration terminal 5 to press a button for starting registration of a motion. User identification information with which the user can be identified may be input when the dedicated application started and the use of the application is started or when a request for starting the motion registration operation is given in step S1.

Subsequently, the registration terminal 5 transmits information requesting start of the motion registration operation (hereinafter referred to as an operation start request) to the server apparatus 3 (step S2), and the server apparatus 3 receives the operation start request (step S3).

When the operation start request is received, the server apparatus 3 requests the wireless device 1 to start specifying the positions of the plurality of sensors 2 in the registration space (step S4). Specifically, the server apparatus 3 transmits information requesting the wireless device 1 to start specifying the positions of the sensors 2 (hereinafter referred to as a position specification request). The wireless device 1 receives the position specifying request from the server apparatus 3 (step S5).

When the wireless device 1 receives the position specifying request, communication between the wireless device 1 and the sensor 2 is started, and distance calculation processing between the wireless device 1 and the sensor 2 is executed (step S6). The user or the cooperator operating the registration terminal 5 to give the operation start request in step S1 confirms that the processing for registering a motion is started in the real world, and then executes a motion desired to be registered in a state where the user wears the sensors 2.

In step S6, for each of the plurality of sensors 2 worn on the body, the distance between each of the plurality of wireless devices 1 and one sensor 2 is calculated. Details of the distance calculation processing will be described below. When the distance is calculated in step S6, the calculated distance is transmitted from each of the plurality of wireless devices 1 to the server apparatus 3 in association with time, the sensor identification information with which each of the sensors 2 can be identified and the device identification information with which each of the wireless devices 1 can be identified (step S7). The server apparatus 3 receives the calculated distance transmitted in association with the time and the sensor identification information with which each of the sensors 2 can be identified and the device identification information with which each of the wireless devices 1 can be identified (step S8).

Subsequently, the position of the sensor 2 is specified based on the distance between each of the plurality of wireless devices 1 and one sensor 2 and the positions of the plurality of wireless devices 1 (step S9). Details of the position specifying processing in step S9 will be described below. The specified position is specified, for example, as coordinate information of an orthogonal coordinate system (XYZ coordinate system) that has a predetermined point in a predetermined space as the origin. The specified positions of the plurality of sensors 2 are stored in association with a time and sensor identification information of the sensors 2 (step S10).

The processing from steps S6 to S10 is repeatedly executed at predetermined time intervals. The predetermined time can be appropriately designed, and is executed, for example, every 1/30 seconds or every 1/60 seconds. The processing from steps S6 to S10 is executed until the motion registration operation is completed. "Until the motion registration operation ends" means, for example, until a predetermined time for executing the motion registration operation passes, or until an input for ending the motion registration operation is executed from the registration terminal 5 and information indicating that the registration operation ends is received from the registration terminal 5 to the wireless device 1 via the server apparatus 3.

Here, in steps S7, S8, and S10, a time associated with other information is not particularly limited as long as the time is information with which a time series of the specified position can be specified, and may be an actual time or a time passing from the start of the motion registration operation. As the time, a time at which a propagation time of communication between the wireless device 1 and the sensor 2 is measured, a time at which a distance between the wireless device 1 and the sensor 2 is calculated, a time at which a position of the sensor 2 is specified, or the like may be adopted.

When the motion registration operation ends (step S11), information regarding the position of the sensor 2 changing over time is stored in the motion management table set in the storage unit 33 of the server apparatus 3 by associating the motion identification information with which the registered motion can be identified with the user identification information with which the user can be identified (step S12). By executing step S12, the series of processing ends. Through the processing, the server apparatus 3 can acquire information regarding the position changing over time for the plurality of sensors 2 worn on the body.

### [Motion Execution Processing]

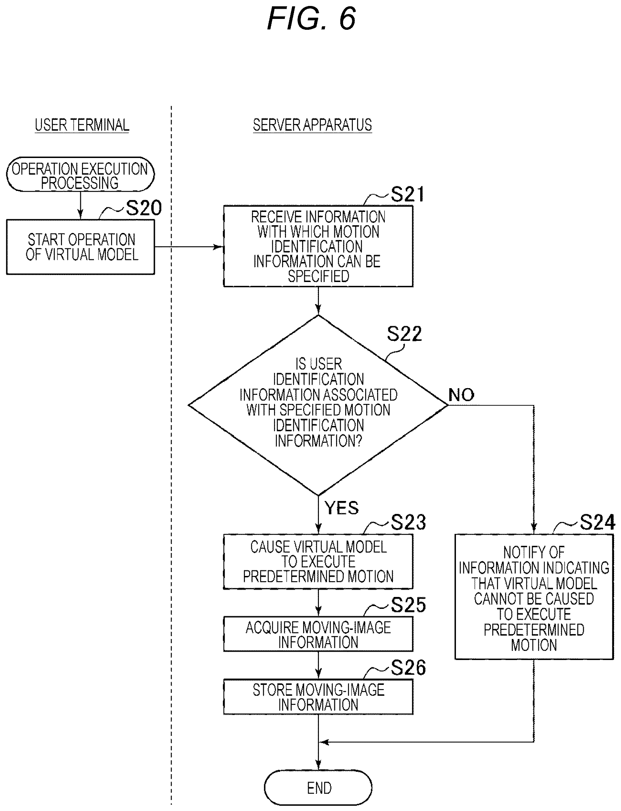

Next, motion execution processing of the virtual model will be described. Fig. 6 is a flowchart illustrating motion execution processing according to the embodiment of the present invention. In the server apparatus 3, a virtual 3-dimensional model (hereinafter referred to as a virtual model) can be set in a virtual space such as a metaverse. This virtual model is a concept including a so-called character or avatar. In the present system, it is possible to cause the virtual model in the virtual space to execute a motion in which a motion of the user is reproduced.

The user operates the user terminal, inputs the user identification information to log in the system 10, and starts operating the virtual model (step S20). The user can operate the user terminal 4 to execute a basic motion such as moving, sitting, or running the virtual model. When the information with which the motion identification information input by the user terminal 4 can be specified is received by the server apparatus 3 (step S21), the server apparatus 3 determines whether the user identification information input at the time of login is associated with the motion identification information specified in the input with reference to the motion management table (step S22). The information with which the motion identification information can be specified is not particularly limited, and can be appropriately designed such as input of a predetermined command and an input of the motion identification information.

When it is determined that the user identification information is associated with the motion identification information (YES in step S22), the virtual skeleton of the virtual model is controlled according to the information regarding the position stored in the motion management table, so that the virtual model can be caused to execute a predetermined motion (step S23). Conversely, when it is determined that the user identification information is not associated with the motion identification information (NO in step S22), the user terminal is notified of information indicating that the virtual model cannot be caused to execute the predetermined motion (step S24).

The information regarding the position stored in the motion management table is information corresponding to a position of the virtual joint by the virtual bone included in the virtual model and/or information corresponding to the position of the end point of the virtual bone not connected to other virtual bone. In step S23, the position of the virtual bone of the virtual model is temporally changed based on the information regarding the position changing over time stored in the motion management table. Accordingly, a motion of the virtual skeleton, which is a combination of a plurality of virtual bones, can be controlled, and the motion of the virtual model can be controlled.

Vertex coordinates of a plurality of polygons are associated with the virtual bone in order to visualize the virtual model. When the position of the virtual bone changes, the coordinates of the vertexes of the associated polygons are also changed with the change. By rendering the model data of the virtual model including the polygons, it is possible to display the virtual model as a 3-dimensional model.

In step S23, a 2-dimensional moving image (hereinafter referred to as moving-image information) can be obtained by executing perspective transformation using the virtual camera in the state in which the virtual model executes the motion in the 3-dimensional virtual space (step S25). This moving-image information is stored in the storage unit 33 of the server apparatus 3 (step S26). Through steps S21 to S26, the motion execution processing of the virtual model ends.

By executing the determination in step S22, only the virtual model corresponding to the predetermined user can execute the predetermined motion. When the NFT is issued in association with the moving-image information regarding the motion of the virtual model to be described below, only the virtual model corresponding to the owner of the NFT may be allowed to execute the predetermined motion. Since the owner of the NFT can transfer the ownership of the NFT to others, a user who can cause the virtual model to execute the predetermined motion is also transferred along with the transfer of the owner of the NFT.

### [NFT Issuing Processing]

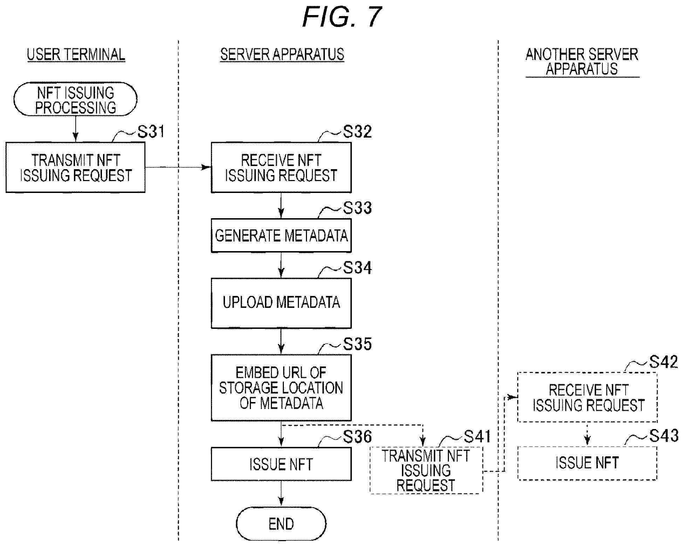

Next, the NFT issue processing will be described. The user can issue the NFT associated with the moving-image information stored in step S26. Fig. 7 is a diagram illustrating a flowchart of an NFT issuing processing according to the embodiment of the present invention. The user operates the user terminal 4, inputs user identification information, and logs in the system 10. Then, the moving-image information stored in association with the user identification information is selected, and the NFT issuing request is transmitted to the server apparatus 3 (step S31). In step S31, information such as description of the motion may be transmitted to the server apparatus 3 together with the NFT issuing request.

When the server apparatus 3 receives the NFT issue request (step S32), the server apparatus 3 generates the metadata (step S33). The metadata includes information regarding the NFT, such as a name of the NFT, a description of the NFT, and a URL in which the moving-image information is stored. Subsequently, the metadata generated by the server apparatus 3 is transmitted and uploaded to the metadata storage server 7 (step S34). The URL of the storage location of the uploaded metadata is notified from the metadata storage server 7 to the server apparatus 3. The URL of the storage location of the metadata is an example of information that can be used to access the moving-image information.

Then, the server apparatus 3 embeds the URL of the storage location of the metadata in a smart contract as a link (step S35), and can issue the NFT by loading the smart contract in the blockchain 6 (step S36). Accordingly, the NFT to be associated with the metadata can be tracked on the blockchain 6. Through steps S31 to S36, the NFT can be issued in association with the moving-image information. Through steps S31 to S36, the NFT associated with the information that can be used to access the moving-image information can be stored on the blockchain. Through steps S31 to S36, the NFT issuing processing ends.

In the NFT issuing processing, instead of step S36, steps S41 to S43 may be executed after step S35. In step S35, when the URL of the storage location of the metadata is embedded as the link in the smart contract in the server apparatus 3, the server apparatus 3 transmits a request for issuing the NFT (NFT issuing request) in association with the metadata to another server apparatus (step S41). When the NFT issuing request is received (step S42), the another server apparatus issues the NFT by loading the smart contract in the blockchain 6 (step S43).

The another server apparatus is an example of other computer apparatus. The processing of step S41 is processing in which the server apparatus 3 requests other computer apparatus to store the NFT associated with information available for accessing the moving-image information on the blockchain.

After step S34, step S41 may be executed. In this case, in step S41, the information of the URL of the storage location of the metadata is transmitted to the another server apparatus. The processing of step S35 is executed in the another server apparatus.

In step S36 or S43, the server apparatus 3 or the another server apparatus may store the NFT associated with the moving-image information on the blockchain 6 in association with an account owned by the predetermined user. The account owned by the user may use the user identification information. In step S36 or S43, the account associated with the NFT is preferably an account of the user corresponding to the user terminal 4 that has transmitted the NFT issuing request in step S31. When the owner of the NFT is changed, the account associated with the NFT is changed to the account of the changed owner. For example, when a user A purchases moving-image information associated with the NFT, the NFT is stored on the blockchain 6 in association with the account owned by the user A.

### [Distance Calculation Processing]

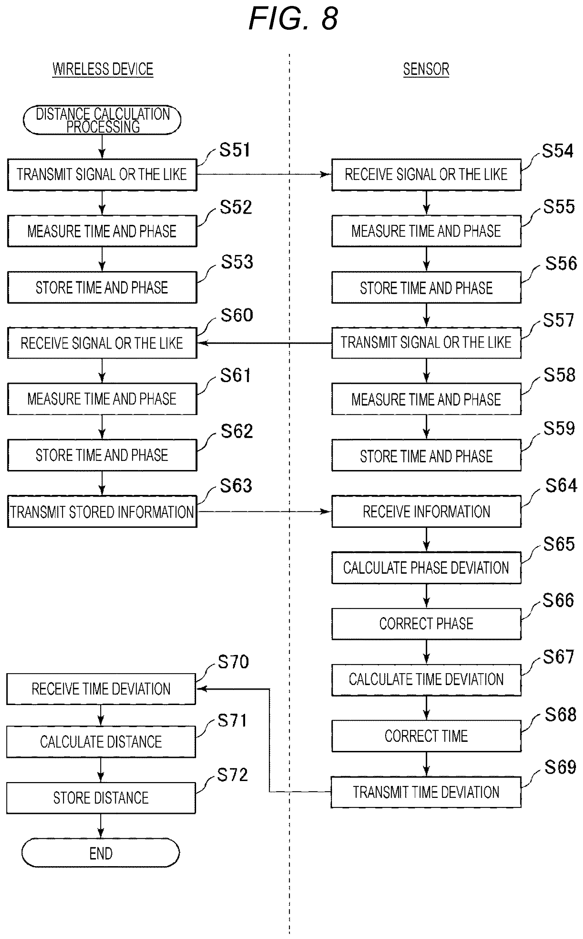

The distance between the wireless device 1 and the sensor 2 is calculated and the position of the sensor 2 can be specified based on the calculated distance. First, distance calculation processing in step S6 will be described. Fig. 8 is a flowchart illustrating distance calculation processing according to the embodiment of the present invention.

First, information or a signal is transmitted from the wireless device 1 to the sensor 2 (step S51). Information or a signal transmitted from the wireless device 1 to the sensor 2 is not particularly limited. The wireless device 1 clocks a time at which the information or the signal is transmitted in step S51 and measures a phase at the transmission (step S52). Then, the clocked time and the measured phase are stored in a memory in the control unit 11 (step S53).

Subsequently, the sensor 2 receives the information or the signal from the wireless device 1 (step S54). The sensor 2 clocks a time at which the information or the signal is received in step S54 and measures a phase at the reception (step S55). Then, the clocked time and the measured phase are stored in the memory 22 (step S56).

Subsequently, the sensor 2 transmits information or a signal to the wireless device 1 (step S57). The information or the signal transmitted from the sensor 2 to the wireless device 1 is not particularly limited. The sensor 2 clocks a time at which the information or the signal is transmitted in step S57 and measures a phase at the transmission (step S58). Then, the clocked time and the measured phase are stored in the memory 22 (step S59).

The wireless device 1 receives the information or the signal transmitted in step S57 (step S60). The wireless device 1 clocks a time at which the information or the signal is received in step S60 and measures a phase at the reception (step S61). Then, the clocked time and the measured phase are stored in the memory in the control unit 11 (step S62). When step S62 ends, the processing proceeds to step S63.

In the wireless device 1, the RF chip 12 transmits information regarding the time and the phase at the transmission of the signal in step S51 stored in step S53 and information regarding the time and the phase at the reception of the signal in step S60 stored in step S62 to the sensor 2 (step S63).

Then, the sensor 2 receives the information regarding the time at which the wireless device 1 transmitted the information or the signal and the phase during the transmission in step S51 and the information regarding the time at which the wireless device 1 receives the information or the signal and the phase during the reception in step S60 (step S64).

Subsequently, the microprocessor 21 of the sensor 2 calculates a phase deviation between the phase of the signal generated by the oscillator 13 of the wireless device 1 and the phase of the signal generated by the oscillator 25 of the sensor 2 (step S65). The phase deviation can be calculated based on a phase difference between a phase of a carrier wave included in information or a signal transmitted from the wireless device 1 to the sensor 2 and a phase of a signal oscillated by the oscillator 25 of the sensor 2 when the sensor 2 receives the information or the signal, and a phase difference between a phase of a carrier wave included in information or a signal transmitted from the sensor 2 to the wireless device 1 and a phase of a signal oscillated by the oscillator 13 of the wireless device 1 when the wireless device 1 receives the information or the signal.

The phase of the carrier wave included in the information or the signal transmitted from the wireless device 1 to the sensor 2 is the phase of the information or the signal transmitted in step S51. The information regarding the phase is transmitted from the wireless device 1 to the sensor 2 in step S63. The phase of the signal oscillated by the oscillator 25 of the sensor 2 when the sensor 2 receives the information or the signal is the phase of the information or the signal received in step S54. The information regarding the phase is measured by the sensor 2 in step S55 and is stored in step S56. The phase of the carrier wave included in the information or the signal transmitted from the sensor 2 to the wireless device 1 is, for example, the phase of the information or the signal transmitted in step S57. The information regarding the phase is stored by the sensor 2 in step S59. The phase of the signal oscillated by the oscillator 13 of the wireless device 1 when the wireless device 1 receives the information or the signal is, for example, the phase of the information or the signal received in step S60. The information regarding the phase is measured in step S61 and is transmitted from the wireless device 1 to the sensor 2 in step S63.

Here, the phase of the carrier wave included in the information or the signal transmitted from the wireless device 1 to the sensor 2 is a concept including not only the phase of the carrier wave included in the information or the signal transmitted from the wireless device 1 to the sensor 2 but also the phase of the carrier wave included in the signal obtained by mixing down the information or the signal. Similarly, the phase of the carrier wave included in the information or the signal transmitted from the sensor 2 to the wireless device 1 is a concept including not only the phase of the carrier wave included in the information or the signal transmitted from the sensor 2 to the wireless device 1 but also the phase of the carrier wave included in the signal obtained by mixing down the information or the signal.

When the phase difference between the phase of the carrier wave included in the information or the signal transmitted from the wireless device 1 to the sensor 2 and the phase of the signal oscillated by the oscillator 25 of the sensor 2 when the sensor 2 receives the information or the signal is defined as ΔΦ_{S}, and the phase difference between the phase of the carrier wave included in the information or the signal transmitted from the sensor 2 to the wireless device 1 and the phase of the signal oscillated by the oscillator 13 of the wireless device 1 when the wireless device 1 receives the information or the signal is defined as ΔΦ_{M}, a phase difference ΔΦ_{P} caused due to a signal propagating between the wireless device 1 and the sensor 2 can be calculated from an arithmetic mean of the phase difference ΔΦ_{S} and the phase difference ΔΦ_{M}. That is, the phase difference ΔΦ_{P} can be calculated by Formula (1): ΔΦ_{P} = 1/2 × (ΔΦ_{S} + ΔΦ_{M}).

When the phase deviation between the wireless device 1 and the sensor 2 is defined as ΔΦ_{C}, a relationship expressed by Formula (2): ΔΦ_{M} = ΔΦₚ + (-ΔΦ_{C}) is established. Therefore, the phase deviation ΔΦ_{C} can be calculated by subtracting the phase difference ΔΦ_{M} from the phase difference ΔΦ_{P}. That is, the phase deviation ΔΦ_{C} can be calculated by Formula (3): ΔΦ_{C} = 1/2 × (ΔΦ_{S} - ΔΦ_{M}). In step S65, the phase deviation between the wireless device 1 and the sensor 2 is calculated using Formula (3).

Here, the phase deviation ΔΦ_{C} is calculated by Formula (3), but the phase deviation ΔΦ_{C} to be calculated may be obtained by further subtracting 2π or 4π, that is, 2nπ. n may take 0 or a positive integer. Therefore, it is also possible to specify whether n is 0, 1, or 2 (that is, whether a value obtained by further subtracting 2nπ from the phase deviation ΔΦ_{C} obtained by Formula (3) is an original phase deviation or whether a value obtained without the subtraction is the original phase deviation) based on a propagation time T_{P} to be described below or a time difference between the wireless device 1 and the sensor 2.

A signal transmitted from the wireless device 1 to the sensor 2 and a signal transmitted from the sensor 2 to the wireless device 1 may start from a state in which an output at the start of transmission is not 0 but any value. In this case, it is necessary to correct the phase deviation ΔΦ_{C} by measuring the phase and the transmission time at the start of transmission. By normally making the phase at the start of transmission constant and executing the transmission at a predetermined time, it is possible to omit processing for correcting ΔΦ_{C} after measuring the phase and the transmission time at the start of transmission.

The sensor 2 corrects the phase of the signal generated by the oscillator 25 of the sensor 2 to achieve synchronization with the signal generated by the oscillator 13 of the wireless device 1 based on the calculated phase deviation ΔΦ_{C} (step S66). The correction of the phase in step S66 is controlled and executed by the microprocessor 21. The phase deviation of the oscillator 25 of the sensor 2 occurs due to the influence of the environment around the sensor 2. By executing the synchronization processing periodically in this manner, the clock 24a of the sensor 2 can be continuously clocked with high accuracy.

Subsequently, in the wireless device 1, the time difference between the wireless device 1 and the sensor 2 is calculated based on a time at which the wireless device 1 transmits information or a signal to the sensor 2, a time at which the sensor 2 transmits information or a signal to the wireless device 1, a time at which the wireless device 1 transmits information or a signal and the sensor 2 receives the information or a signal and clocks a time, and a time at which the sensor 2 transmits information or a signal and the wireless device 1 receives the information or the signal and clocks a time (step S67).

The time at which the wireless device 1 transmits information or a signal to the sensor 2 is the time at which the information is transmitted in step S51. Information regarding the time is transmitted from the wireless device 1 to the sensor 2 in step S63. The time at which the information or the signal is transmitted from the sensor 2 to the wireless device 1 is the time at which the information or the signal is transmitted in step S57. The information regarding the time is stored by the sensor 2 in step S59. Subsequently, the time at which information or a signal is transmitted from the wireless device 1 and the sensor 2 receives and clocks the time is the time at which the information is received in step S54. The information regarding the time is recorded by the sensor 2 in step S55 and stored in step S56. The time at which information or a signal is transmitted from the sensor 2 and the wireless device 1 receives and clocks the information or the signal is the time at which the information or the signal is received in step S60. The information regarding the time is clocked in step S61 and transmitted from the wireless device 1 to the sensor 2 in step S63.

When the time at which the wireless device 1 transmits information or a signal to the sensor 2 is defined as T_{M}, the time at which the sensor 2 transmits information or a signal to the wireless device 1 is defined as T_{S}, the time at which the wireless device 1 transmits information or a signal and the sensor 2 receives the information or the signal and clocks a time is defined as T_{MS}, and the time at which the sensor 2 transmits information or a signal and the wireless device 1 receives the information or the signal and clocks the time is defined as T_{SM}, the time difference between the wireless device 1 and the sensor 2 can be calculated by Formula (4): T_{L} = 1/2 × ((T_{SM} - T_{S}) - (T_{MS} - T_{M})). In step S67, the time difference between the wireless device 1 and the sensor 2 is calculated by Formula (4). The sensor 2 corrects the time in the sensor 2 to achieve synchronization with the time of the wireless device 1 based on the calculated time difference (step S68). Next, an information regarding the time difference calculated in step S67 is transmitted from the sensor 2 to the wireless device 1 (step S68). The wireless device 1 receives the transmitted information regarding the time difference.

Subsequently, a distance between the wireless device 1 and the sensor 2 is calculated (step S71). In step S71, the distance between the wireless device 1 and the sensor 2 can be calculated by calculating a propagation time in which information or a signal propagates between the wireless device 1 and the sensor 2 by a substantial difference between a time at which the wireless device 1 transmits the information or the signal and a time at which the sensor 2 receives the information or the signal, and multiplying the propagation time by a propagation speed (for example, the speed of light) of the information or the signal. A difference between the time at which the wireless device 1 transmits the information or the signal and the time at which the sensor 2 receives the information or the signal can be calculated based on, for example, a time at which the wireless device 1 transmits the information or the signal to the sensor 2 in step S51 (a time at which the wireless device 1 transmits the information or the signal to the sensor 2 in step 63), a time at which the sensor 2 receives the information or the signal from the wireless device 1 in step S54 and the information or the signal is stored in the memory 22 in step S56, and the time difference calculated in step S67.

In step S71, the distance between the wireless device 1 and the sensor 2 can be calculated by calculating a propagation time in which information or a signal propagates between the wireless device 1 and the sensor 2 by a substantial difference between a time at which the sensor 2 transmits information or a signal and a time at which the wireless device 1 receives the information or the signal, and multiplying the propagation time by a propagation speed (for example, the speed of light) of the information or the signal. The difference between the time at which the information or the signal is transmitted by the sensor 2 and the time at which the wireless device 1 receives the information or the signal can be calculated based on, for example, the time at which the information or the signal is transmitted from the sensor 2 to the wireless device 1 in step S57 and stored in the memory 22 in step S59, the time at which the information or the signal is received by the wireless device 1 in step S60 (transmitted from the wireless device 1 to the sensor 2 in step S63), and the time difference calculated in step S67.

The distance between the wireless device 1 and the sensor 2 calculated in step S71 is stored in the memory in the control unit 11 of the wireless device 1 in association with, for example, time information regarding the calculated time or the like and identification information with which the wireless device 1 can be identified (or positional information of the wireless device 1) (step S72). When step S72 is executed, the distance calculation processing ends.

By executing the processing from steps S51 to S72, can not only a time deviation and a phase deviation between the wireless device 1 and the sensor 2 be corrected, but the distance between the wireless device 1 and the sensor 2 can also be calculated. While the time deviation between the wireless device 1 and the sensor 2 is corrected in step S68, it is not always necessary to correct the time deviation, and the distance between the wireless device 1 and the sensor 2 can be calculated without correcting the time deviation based on the time deviation calculated in step S67. While the phase deviation between the wireless device 1 and the sensor 2 is corrected in step S66, it is not always necessary to correct the phase deviation, and the distance between the wireless device 1 and the sensor 2 can be calculated without correcting the phase deviation.

While the time deviation and the phase deviation between the wireless device 1 and the sensor 2 are corrected and the distance between the wireless device 1 and the sensor 2 is calculated by executing the processing from steps S51 to S72, it is also possible to separately execute processing for correcting the time deviation between the wireless device 1 and the sensor 2, processing for correcting the phase deviation between the wireless device 1 and the sensor 2, and processing for calculating the distance between the wireless device 1 and the sensor 2.

In the processing for calculating the distance between the wireless device 1 and the sensor 2, the distance between one sensor 2 and each of the plurality of wireless devices 1 can be calculated. When the position of the sensor 2 is specified, as will be described below, the distance between the wireless device 1 and the sensor 2 is specified by the number of wireless devices 1 required for specifying the position. Here, even when the distance to each of the plurality of wireless devices 1 is calculated for one sensor 2, time deviation correction processing and phase deviation correction processing may be executed only by one wireless device 1, and the time deviation correction processing and the phase deviation correction processing may not be executed during communication with the other wireless devices 1.

Here, the sensor 2 calculates the distance between the wireless device 1 and the sensor 2. Instead of the sensor 2, the wireless device 1 may calculate the distance between the wireless device 1 and the sensor 2 through the same processing as step S71. When the distance is calculated by the wireless device 1, the distance between the wireless device 1 and the sensor 2 is stored in the memory in the control unit 11 in association with time information regarding the calculated time or the like and the identification information with which the sensor 2 can be identified.

Instead of the sensor 2, the server apparatus 3 may calculate the distance between the wireless device 1 and the sensor 2 through the same processing as step S71. When the distance is calculated in the server apparatus 3, information necessary for the calculation is received directly or indirectly from the wireless device 1 and/or the sensor 2. When the distance is calculated in the server apparatus 3, the distance between the wireless device 1 and the sensor 2 is stored in the storage unit 33 of the server apparatus 3 in association with time information regarding the calculated time or the like, identification information with which the wireless device 1 can be identified (or positional information of the wireless device 1), and identification information with which the sensor 2 can be identified.

### [Position Specifying Processing]

Next, position specifying processing according to an embodiment of the present invention will be described. In order to specify the position of the sensor 2, it is assumed that a distance to each of the plurality of wireless devices 1 is calculated for one sensor 2 in the distance calculation processing. For example, when the height of one sensor 2 is different from the height of at least one of the plurality of wireless devices 1 and the wireless devices 1 are not on the same plane, the position (for example, XYZ coordinates of the sensor 2 or latitude and longitude) of the sensor 2 can be specified based on the distance between one sensor 2 and each of the four wireless devices 1 and the position of each of the four wireless devices 1. In this case, it is preferable that the four wireless devices 1 are not on the same plane. For example, an installation height of at least one wireless device 1 is preferably different from installation heights of the other three wireless devices 1. In this way, even when the sensor 2 is located at any position, it is possible to specify the position in three dimensions.

Even when one sensor 2 and at least one of the plurality of wireless devices 1 have different heights and are not located on the same plane and it is clear whether one sensor 2 is located in an up direction or a down direction with respect to a plane including the wireless device 1, the position of the sensor 2 can be specified based on information regarding whether the sensor 2 is located at any position with respect to the plane, the distance between one sensor 2 and each of three wireless devices 1, and the position of each of the three wireless devices 1. For example, when the user executes the motion registration processing in a predetermined room of a building that has a plurality of floors, the system 10 can specify the position of the sensor 2 in step S9 by attaching three wireless devices 1 to predetermined floors and inputting the number of the room in which the user executes the motion in step S1.

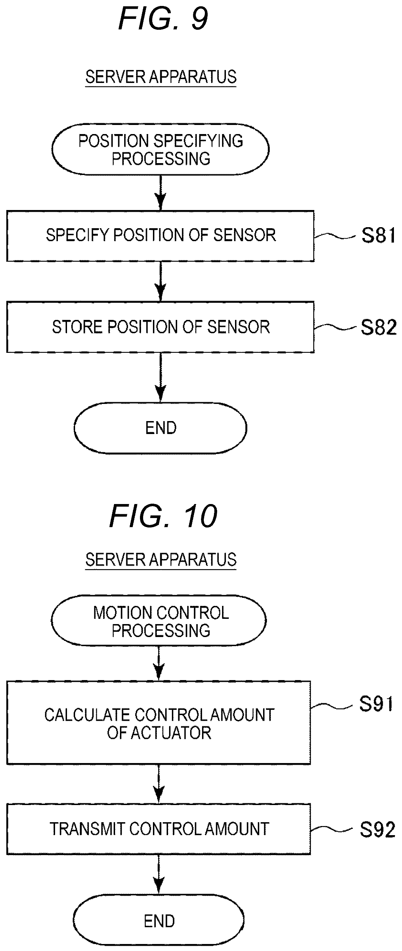

Fig. 9 is a flowchart illustrating the position specifying processing according to the embodiment of the present invention. The position specifying processing illustrated in Fig. 9 can be executed, for example, by any of the wireless device 1, the sensor 2, or the server apparatus 3. When the position specifying processing is executed in the wireless device 1 or the server apparatus 3, the information regarding the distance between each of the plurality of wireless devices 1 and the sensor 2 (the distance calculated in step S71) is transmitted to the wireless device 1 or the server apparatus 3 for use in association with time information regarding the calculated time, the identification information of the wireless device 1 (or the position information of the wireless device 1), and the identification information of the sensor 2. Hereinafter, a case where the position specifying processing is executed by the server apparatus 3 will be described.

In the position specifying processing, the position of the sensor 2 is specified based on the distance between each of the plurality of wireless devices 1 and the sensor 2 and the position of the wireless device 1 (step S81). The position of the wireless device may be stored in advance in the storage unit 33 of the server apparatus 3 that executes the position specifying processing. Calculation processing for specifying the position of the sensor 2 is not particularly limited.

The specified position of the sensor 2 is stored in the storage unit 33 of the server apparatus 3 in association with the time information regarding the calculated time (the time information regarding the time at which the distance is calculated or the time information regarding the time at which the position is specified), the identification information of the wireless device 1 (or the positional information of the wireless device 1), and the identification information of the sensor 2 (step S82). With steps S81 and S82, the position specifying processing ends. The process of step S81 corresponds to the process of step S9.

The distance between each of the plurality of wireless devices 1 and the sensor 2 that is sources with which the position of the sensor 2 is specified in step S81, is preferably calculated at the same time or a close time (for example, the distance is calculated when the time at which each of the plurality of wireless devices and the sensor measure the propagation time of the information or the signal is the same time or a close time). Here, the close time is not particularly limited, but is preferably a time within a range of a predetermined time from one time. By using the distance between each of the plurality of wireless devices 1 and the sensor 2 calculated at the same time or a close time, a more accurate position at that time can be specified.

In the above-described embodiment, the position of each of the plurality of sensors worn at the plurality of different positions of the human body or the animal body is specified at predetermined time intervals, and the virtual model is caused to execute the motion similar to the motion of the human or the animal based on the specified position. However, it is also possible to control or assist a motion of a human or an animal in the real world based on the specified position. More specifically, the motion is executed when an exoskeleton or a wearable robot is worn on a human or an animal. The exoskeleton or wearable robot includes, for example, a structural frame to be worn on a human body or an animal body and an actuator that moves a joint portion connecting the structural frame and the structural frame. The actuator can be connected to one computer apparatus through communication, and can control or assist a motion of the human or the animal wearing the exoskeleton or wearable robot by controlling the motion of the actuator according to an instruction from the computer apparatus.

Here, a flowchart when the server apparatus 3 communicates with the exoskeleton or wearable robot and controls the exoskeleton or wearable robot will be described. However, the motion of the exoskeleton or wearable robot can be controlled by the other computer apparatus by transmitting information regarding the specified position from the server apparatus 3 to the other computer apparatus.

Fig. 10 is a flowchart illustrating motion control processing according to the embodiment of the present invention. First, the server apparatus 3 calculates a control amount for controlling a motion of one or a plurality of actuators incorporated in the exoskeleton or wearable robot based on the positions of the sensors at the predetermined time intervals stored in step S12 (step S91). The motion of the calculation target actuator may be a linear motion or a rotational motion. The control amount can be calculated in accordance with a known scheme. Subsequently, the server apparatus 3 transmits the calculated control amount of one or the plurality of actuators to the control unit or the actuator included in the exoskeleton or wearable robot (step S92). The exoskeleton or wearable robot that has received the control amount controls the actuator based on the received control amount. As a result, the motion of the human or the animal wearing the exoskeleton or wearable robot can be controlled or assisted. Through steps S91 to S92, the motion control processing ends. The motion control processing from steps S91 to S92 is repeatedly executed at the predetermined time intervals. When the plurality of sensors is worn on the body of the human or the animal to specify the motion, it is preferable to wear the sensors at positions on the body corresponding to the exoskeleton or the wearable joint.

In this way, a motion of a specific human is specified with the sensors, and the motion specified by the exoskeleton or others wearing the wearable robot is reproduced, so that the motion (for example, a golf swing or the like) of a professional player can be reproduced and utilized for medical care such as a rehabilitation.

### Reference Signs List

- 1: Wireless device
- 2: Sensor
- 3: Server apparatus
- 4: User terminal
- 5: Registration terminal
- 6: Blockchain
- 7: Metadata storage server
- 10: System
- 11: Control unit
- 12: RF Chip
- 12a: Clock
- 12b: Phase detector
- 13: Oscillator
- 21: Microprocessor
- 22: Memory
- 23: Antenna
- 24: RF Chip
- 24a: Clock
- 24b: Phase detector
- 25: Oscillator
- 26: Battery
- 31: Control unit
- 32: RAM
- 33: Storage unit
- 34: Communication Interface

## Claims

1. A system that includes at least one computer apparatus, the system comprising:
a position specifier that specifies a position of each of a plurality of sensors worn at a plurality of different positions of a human body or an animal body at predetermined time intervals.

2. The system according to claim 1, comprising:
a position storage that stores the position of each of the plurality of sensors specified by the position specifier at the predetermined time intervals.

3. The system according to claim 1 or 2, comprising:
a motion executer that causes a virtual model to execute a motion in a virtual space based on the position of each of the plurality of sensors at the predetermined time intervals specified by the position specifier.

4. The system according to claim 3, wherein the motion executer enables a motion to be executed only by the virtual model corresponding to a predetermined user.

5. The system according to claim 3, comprising:
a storage that stores a non-fungible token (NFT) associated with the information regarding the motion on a blockchain in association with an account owned by a predetermined user.

6. The system according to claim 1 or 2, comprising:
an exoskeleton or wearable robot worn by a human or an animal and that is capable of controlling or assisting a motion of the human or the animal in the real world; and
a controller that controls or assists the human or the animal wearing the exoskeleton or wearable robot to execute a motion based on the position of each of the plurality of sensors at the predetermined time intervals specified by the position specifier.

7. The system according to claim 1 or 2, comprising:
a plurality of wireless devices; and
a distance calculator that calculates a distance between each of the plurality of wireless devices and the sensor based on information or a signal propagation time between each of the plurality of wireless devices and the sensor at the predetermined time intervals,
wherein the position specifier specifies a position of the sensor based on the calculated distance between each of the plurality of wireless devices and the sensor.

8. The system according to claim 7, wherein the distance calculator calculates the distance based on a time deviation between a clock of one of the wireless devices and a clock of the sensor.

9. The system according to claim 7, comprising:
a time deviation calculator that calculates a time deviation between one of the wireless devices and the sensor by executing communication between the one wireless device and the sensor; and
a time corrector that corrects a time in the sensor based on the calculated time deviation.

10. The system according to claim 7, comprising:
a phase deviation calculator that calculates a phase deviation between clocks of one of the wireless devices and the sensor by executing communication between the one wireless device and the sensor; and
a phase corrector that corrects a phase in the sensor based on the calculated phase deviation.

11. A method executed in a system including at least one computer apparatus, the method comprising:
a position specifying step of specifying a position of each of a plurality of sensors worn at a plurality of different positions of a human body or an animal body at predetermined time intervals.
